# EUROPEAN PATENT SPECIFICATION

(11) **EP 4 280 319 B1**
(45) Date of publication and mention of the grant of the patent: **23.09.2026**
(21) Application number: 22767504.8
(22) Date of filing: 08.03.2022
(51) Int. Cl.: H01M 8/04119, B01D 63/02, B01D 63/04, H01M 8/10

(54) **MEMBRANE HUMIDIFIER FOR FUEL CELL**
MEMBRANBEFEUCHTER FÜR BRENNSTOFFZELLE
HUMIDIFICATEUR À MEMBRANE POUR PILE À COMBUSTIBLE

(30) Priority: 11.03.2021 KR 20210031932
(43) Date of publication of application: 22.11.2023
(73) Proprietor: Kolon Industries, Inc., Seoul 07793 (KR)
(72) Inventor: OH, Young Seok, Seoul 07793 (KR); LEE, Ah Reum, Seoul 07793 (KR); LEE, Ji Yoon, Seoul 07793 (KR); KIM, Kyoung Ju, Seoul 07793 (KR)
(74) Representative: Vossius & Partner Patentanwälte Rechtsanwälte mbB
(86) International application number: PCT/KR2022/003308
(87) International publication number: WO 2022/191608

(56) References cited:
- EP-A1- 3 312 923
- EP-A1- 4 235 879
- EP-A1- 4 266 435
- EP-A1- 4 273 977
- EP-A1- 4 350 820
- CN-A- 110 545 902
- JP-B2- 5 012 109
- KR-A- 20180 037 390
- KR-A- 20190 055 635
- KR-A- 20190 138 288
- KR-A- 20190 138 288
- KR-A- 20210 011 204
- KR-A- 20210 011 204
- KR-B1- 101 364 354

## Description

### Technical Field

The present invention relates to a membrane humidifier for a fuel cell, and more particularly, to a membrane humidifier for a fuel cell capable of preventing humidification efficiency from being degraded due to a pressure difference between the inside and the outside of a membrane humidifier.

### Background Art

Fuel cells are power generation cells that produce electricity through coupling between hydrogen and oxygen. The fuel cells have an advantage of being able to continuously produce electricity as long as the hydrogen and the oxygen are supplied, and having an efficiency that is about twice higher than an internal combustion engine because of no heat loss, unlike general chemical cells such as dry batteries or storage batteries.

Further, since chemical energy generated through coupling between the hydrogen and the oxygen is directly converted into electrical energy, emission of pollutants is reduced. Therefore, the fuel cells have an advantage of being environmentally friendly and being able to reduce concerns about resource depletion due to increased energy consumption.

These fuel cells are roughly classified into, for example, a polymer electrolyte membrane fuel cell (PEMFC), a phosphoric acid fuel cell (PAFC), a molten carbonate fuel cell (MCFC), a solid oxide fuel cell (SOFC), and an alkaline fuel cell (AFC) depending on a type of electrolyte used.

These fuel cells fundamentally operate according to the same principle, but have a difference in a type of fuel used, an operating temperature, a catalyst, an electrolyte, or the like. Among the cells, the polymer electrolyte membrane fuel cell is known to be the most promising not only for small-scale stationary power generation equipment but also for transportation systems because the polymer electrolyte membrane fuel cell operates at a lower temperature than other fuel cells and can be miniaturized due to a high output density.

One of the most important factors in improving the performance of the polymer electrolyte membrane fuel cell (PEMFC) is to maintain moisture content by supplying a certain amount or more of moisture to a polymer electrolyte membrane (or proton exchange membrane: PEM) of a membrane electrode assembly (MEA). This is because the efficiency of power generation is rapidly degraded when the polymer electrolyte membrane is dried.

Examples of a method for humidifying the polymer electrolyte membrane include 1) a bubbler humidification scheme for filling a pressure-resistant container with water and then passing a target gas through a diffuser to supply moisture, 2) a direct injection scheme for calculating a moisture supply amount required for a fuel cell reaction and directly supplying moisture to a gas flow pipe through a solenoid valve, and 3) a humidification membrane scheme for supplying moisture to a fluidized gas layer using a polymer separation membrane.

Among these, the humidification membrane scheme for humidifying a polymer electrolyte membrane by providing water vapor to a gas supplied to the polymer electrolyte membrane using a membrane that selectively permeates only water vapor contained in an off-gas is advantageous in that a weight and size of a humidifier can be reduced.

A selective permeable membrane used in the humidification membrane scheme is preferably a hollow fiber membrane having a large permeable area per unit volume when a module is formed. That is, when a membrane humidifier is manufactured using hollow fiber membranes, there are advantages that high integration of the hollow fiber membranes with a large contact surface area is possible so that a fuel cell can be sufficiently humidified even with a small capacity, low-cost materials can be used, and moisture and heat contained in an unreacted gas discharged with a high temperature from the fuel cell can be recovered and can be reused through the humidifier.

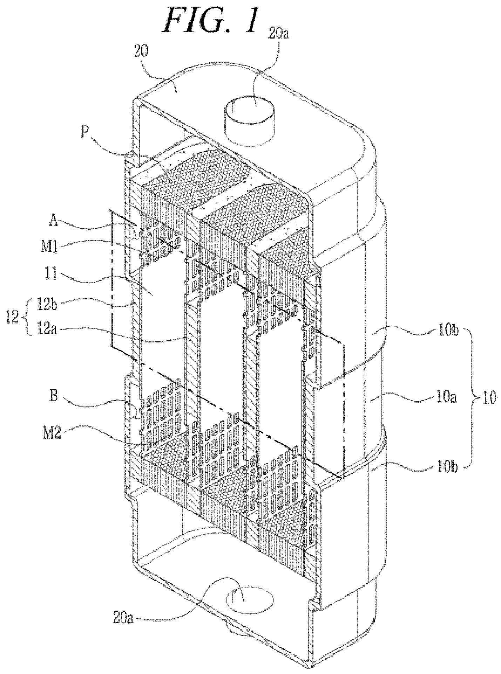

Meanwhile, when the membrane humidifier operates, there is a problem in that humidification efficiency is degraded due to a pressure difference between the inside and the outside of the membrane humidifier. This will be described with reference to FIG. 1, FIG. 2, and FIG. 3.

FIG. 1, FIG. 2, and FIG. 3 are cross-sectional views of a membrane humidifier for a fuel cell according to the related art. For convenience of description, only hollow fiber membranes in a portion of a potting portion P are illustrated in the drawing, and illustration of hollow fiber membranes of other portions are omitted. In the membrane humidifier of the related art, a hollow fiber membrane module 11 in which a plurality of hollow fiber membranes are accommodated is accommodated inside a middle case 10. As illustrated, the hollow fiber membrane module 11 may be formed in the form of a cartridge. A module insertion portion 12 into which the hollow fiber membrane module 11 in the form of a cartridge is inserted is formed inside the middle case 10. The module insertion portion 12 is formed of a plurality of partition walls 12a and 12b formed inside the middle case 10. Here, the partition wall 12b forming an outer shell of the module insertion portion 12 is substantially a portion of an inner wall of the middle case 10.

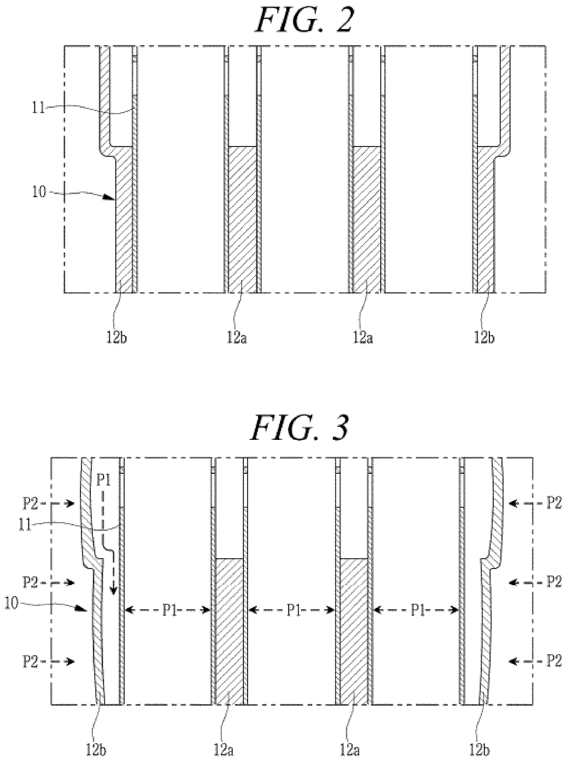

As illustrated in FIG. 2, the hollow fiber membrane module 11 is inserted into the module insertion portion 12 by both sides of the hollow fiber membrane module 11 being put into the partition walls 12a and 12b. In this case, the middle case 10 includes a central recessed portion 10a of which a central portion is recessed, and an inner wall of the central recessed portion 10a and the hollow fiber membrane module 11 are tightly adhered to each other. As a result, two fluid flow spaces A and B formed by a non-recessed portion 10b of the middle case 10 and the hollow fiber membrane module 11 are isolated from each other. The central recessed portion 10a and the partition wall 12b forming the outer shell of the module insertion portion 12 are substantially the same.

Meanwhile, a second fluid discharged from a fuel cell stack (not illustrated) flows into the inside through a fluid inlet (not illustrated) formed in the middle case 10 and flows through the hollow fiber membrane module 11 performs moisture exchange with a first fluid supplied from a blower and flowing inside the hollow fiber membranes. A cap case 20 is coupled to the middle case 10, and a fluid inlet 20a through which the first fluid flows into/from the inside is formed in the cap case 20.

However, in the case of a high-pressure operating condition, that is, when the second fluid flowing into the inside from the fluid inlet (not illustrated) formed in the middle case 10 is a high-pressure fluid having a higher pressure than atmosphere outside the membrane humidifier, a pressure difference occurs between the inside and the outside of the membrane humidifier and the pressure of the second fluid flowing inside the membrane humidifier is higher than external atmospheric pressure, and thus, a pressure gradient is formed toward the outside of the membrane humidifier and a portion of the membrane humidifier (specifically, a recessed portion of the middle case) is deformed in a direction outside the membrane humidifier, as illustrated in FIG. 3. On the other hand, since the internal partition 12a has the same pressure on both sides of the partition, a pressure gradient is not formed and deformation does not occur.

Change in a shape of the middle case 10 due to the pressure gradient creates a gap between the hollow fiber membrane module 11 and the inner wall of the middle case 10, and the second fluid in a fluid flow space A flows into a fluid flow space B through this gap instead of flowing through the hollow fiber membrane module 11. The second fluid that does not flow through the hollow fiber membrane module 11 is a fluid that has not been humidified through the hollow fiber membranes, which causes a problem in that the humidification efficiency is degraded.

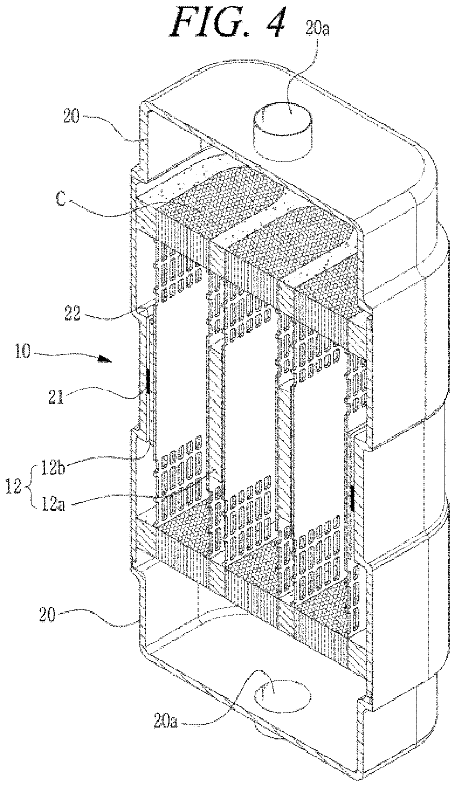

FIG. 4 is a diagram illustrating another membrane humidifier for a fuel cell (see Korean Unexamined Patent Publication No. 2019-0138288) according to the related art for solving the problems of the membrane humidifier for a fuel cell of the related art illustrated in FIG. 1.

As illustrated in FIG. 4, in another membrane humidifier for a fuel cell of the related art, a module insertion portion 12 and a pressure buffer portion 22 are formed inside a middle case 10. The pressure buffer portion 22 includes a space formed by an outer partition wall 12b and the middle case 10 spaced apart from each other, and a connection portion 21 formed between the outer partition wall 12b and the middle case 10. The connection portion 21 isolates a fluid flow space A from a fluid flow space B so that a fluid flowing into the inside through a fluid passage 20a flows only through a hollow fiber membrane cartridge C.

The pressure buffer portion 22 configured as described above makes pressure on both sides of the outer partition wall 12b substantially the same. Since a pressure gradient is not formed on both the sides of the outer partition wall 12b due to the pressure buffer portion 22, the outer partition wall 12b is not deformed. Therefore, a gap is not created between the hollow fiber membrane cartridge C and the outer partition wall 12b, unlike the membrane humidifier for a fuel cell illustrated in FIG. 1, making it possible to prevent the fluid in the fluid flow space A from flowing through the fluid flow space B instead of flowing through the hollow fiber membrane module, and as a result, to prevent the humidification efficiency from being degraded.

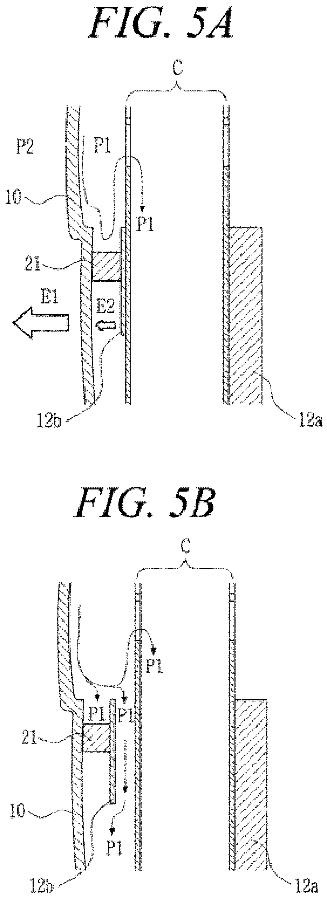

Meanwhile, in the membrane humidifier for a fuel cell according to the related art as illustrated in FIG. 4, when pressure (internal pressure P1) of the second fluid flowing into the inside from a fluid inlet (not illustrated) formed in the middle case 10 is much higher than atmospheric pressure (external pressure P2) outside the membrane humidifier (P1 >> P2) due to a high output situation or an abnormal output situation of a fuel cell, the middle case 10 may receive an outward pressure and expand outward (indicated by El) due to a pressure difference, as illustrated in FIG. 5A and FIG. 5B. In this case, since the outer partition wall 12b is connected to the connection portion 21, the outer partition wall 12b may also expand outward (indicated by E2). When the outer partition wall 12b expands outward, a gap may be created between the hollow fiber membrane cartridge C and the outer partition wall 12b. Therefore, the second fluid that does not flow through the hollow fiber membrane module 11 is generated, which causes a problem in that the humidification efficiency is degraded.

### Disclosure

### Technical Problem

An object of the present invention is to provide a membrane humidifier for a fuel cell capable of preventing the humidification efficiency from being degraded due to a pressure difference between the inside and the outside of the membrane humidifier.

### Technical Solution

The invention is specified by the independent claim. Preferred embodiments are defined in the dependent claims. In the following description, although numerous features may be designated as optional, it is nevertheless acknowledged that all features comprised in the independent claim are not to be read as optional. A membrane humidifier for a fuel cell according to an embodiment of the present invention includes
a middle case having a module insertion portion formed therein, the module insertion portion including an outer partition wall formed to be spaced apart from an inner wall of a middle case; a cap case coupled to the middle case; a hollow fiber membrane module inserted into the module insertion portion and including at least one hollow fiber membrane bundle having a plurality of hollow fiber membranes integrated therein or at least one hollow fiber membrane cartridge having a plurality of hollow fiber membranes accommodated therein; and an active pressure buffer portion formed between the middle case and the module insertion portion to prevent the module insertion portion from expanding due to a pressure difference between the inside and the outside of the middle case or eliminate a pressure difference, depending on an output situation of a fuel cell.

In the membrane humidifier for a fuel cell according to the embodiment of the present invention, the active pressure buffer portion includes a bypass structure formed between the outer partition wall and the inner wall of the middle case.

In the membrane humidifier for a fuel cell according to the embodiment of the present invention, the bypass structure includes a pair of protrusion members formed to be fixed to the outer partition wall, protrude in a direction of the middle case, and be spaced apart from the inner wall of the middle case; a sliding space formed between the pair of protruding members; and an insertion member formed on the inner wall of the middle case, protruding in a direction of the outer partition wall, and inserted into the sliding space.

In the membrane humidifier for a fuel cell according to the embodiment of the present invention, the insertion member includes bypass holes, the bypass holes being able to be opened or closed depending on a magnitude of expansion pressure between the outer partition wall and the middle case.

In an aspect of the present invention, when the expansion pressure gradually increases, the insertion member may expand outward along with the middle case, and the bypass holes are opened.

In the membrane humidifier for a fuel cell according to the embodiment of the present invention, first sliding protrusions protruding in opposite directions may be formed at ends of the pair of protrusion members on the middle case side.

In the membrane humidifier for a fuel cell according to the embodiment of the present invention, a second sliding protrusion protruding in directions of the protrusion members may be formed at an end of the insertion member on the outer partition wall side.

Other specific matters of implementation examples according to various aspects of the present invention are included in the detailed description below.

### Advantageous Effects

According to an embodiment of the present invention, it is possible to prevent the humidification efficiency from being degraded due to a pressure difference between the inside and the outside of the membrane humidifier. Further, it is possible to prevent a gap from being created between a hollow fiber membrane cartridge and an outer partition or eliminate a difference in pressure even in a high output situation or an abnormal output situation of a fuel cell to prevent the humidification efficiency from being degraded.

### Description of Drawings

FIG. 1, FIG. 2, and FIG. 3 are views illustrating problems of a membrane humidifier for a fuel cell according to the related art.
FIG. 4 is a view illustrating another membrane humidifier for a fuel cell according to the related art for solving the problems of the membrane humidifier for a fuel cell of the related art illustrated in FIG. 1.
FIG. 5A and FIG. 5B are views illustrating problems of the other membrane humidifier for a fuel cell according to related art illustrated in FIG. 4.
FIG. 6, FIG. 7, FIG. 8, and FIG. 9 are views illustrating various types of membrane humidifiers for a fuel cell according to an embodiment of the present invention.
FIG. 10 is a cross-sectional view illustrating a portion of a middle case of the membrane humidifier for a fuel cell according to the embodiment of the present invention.
FIG. 11, FIG. 12, and FIG. 13 are enlarged cross-sectional views of change in state depending on expansion pressure of a bypass structure, which is a component of an active pressure buffer portion of the membrane humidifier for a fuel cell according to the embodiment of the present invention.
FIG. 14 is a cross-sectional view illustrating an operating state of the membrane humidifier for a fuel cell according to the embodiment of the present invention.

### Mode for Disclosure

Since various changes may be made to the present invention, which may have several embodiments, specific embodiments will be illustrated and described in detail herein.

The terms used herein are used for the purpose of describing specific embodiments only and are not intended to limit the present invention. The singular expressions "a," "an" and "the" include the plural expressions, unless the context clearly indicates otherwise. It will be understood that the terms "include" or "have" herein specify the presence of features, numbers, steps, operations, components, parts or combinations thereof described herein, but do not preclude the presence or addition of one or more other features, numbers, steps, operations, components, parts or combinations thereof. Hereinafter, a gasket assembly and a fuel cell membrane humidifier including the same according to embodiments of the present invention will be described with reference to the drawings.

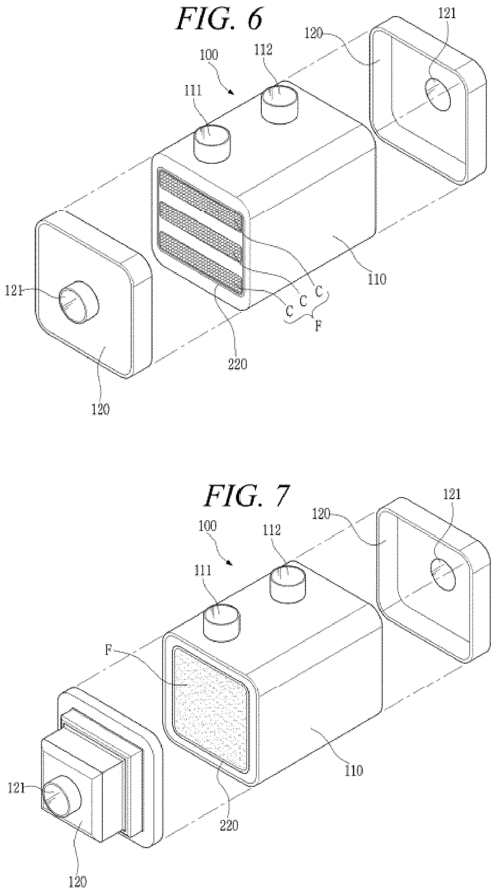

FIG. 6, FIG. 7, FIG. 8, and FIG. 9 are views illustrating various types of membrane humidifiers for a fuel cell according to an embodiment of the present invention. As illustrated in FIG. 6, FIG. 7, FIG. 8, and FIG. 9, the membrane humidifier for a fuel cell (hereinafter also referred to as a 'membrane humidifier') according to the embodiment of the present invention includes a middle case 110 and a cap case 120.

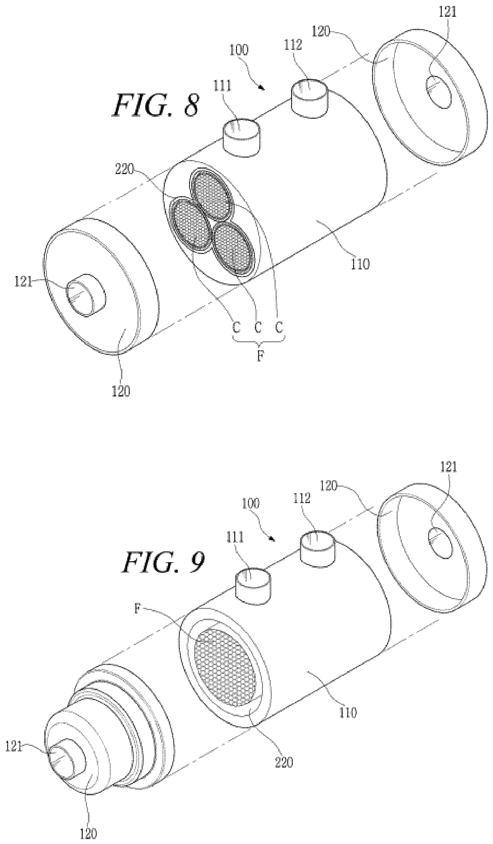

The middle case 110 is combined with the cap case 120 to form an outer shape of the membrane humidifier. The middle case 110 and the cap case 120 may be made of hard plastic such as polycarbonate or metal. The middle case 110 and the cap case 120 may have a polygonal cross-sectional shape in a width direction, as illustrated in FIGS. 6 and 7. The polygon may be a quadrangle, a square, a trapezoid, a parallelogram, a pentagon, a hexagon, or the like, and the polygon may have a shape with rounded comers. Alternatively, the cross-sectional shape in the width direction may be a circular shape, as illustrated in FIGS. 8 and 9. The circular shape may be an elliptical shape. FIG. 6, FIG. 7, FIG. 8, and FIG. 9 illustrate only examples of the shape of the membrane humidifier, but the present invention is not limited thereto.

In the middle case 110, a second fluid inlet 111 through which the second fluid is supplied, and a second fluid outlet 112 through which the second fluid is discharged are formed, and a hollow fiber membrane module F in which a plurality of hollow fiber membranes are accommodated is disposed inside the middle case 110. Depending on a design, reference sign 111 may denote the second fluid outlet through which the second fluid is discharged, and reference sign 112 may denote a second fluid inlet through which the second fluid is supplied. That is, one of reference signs 111 and 112 may denote the second fluid inlet, and the other may denote the second fluid outlet. In the following description, an example in which reference sign 111 denotes the second fluid inlet and reference sign 112 denotes the second fluid outlet will be described, but the present invention is not limited thereto.

The hollow fiber membrane module F may be a hollow fiber membrane bundle in which a plurality of hollow fiber membranes are integrated as illustrated in FIGS. 7 and 9, or may be hollow fiber membrane cartridges in which hollow fiber membranes or hollow fiber membrane bundles are accommodated as illustrated in FIGS. 6 and 8. A case in which a plurality of hollow fiber membrane cartridges form the hollow fiber membrane module F is illustrated in FIGS. 6 and 8, the present invention is not limited thereto, and the hollow fiber membrane module F may be formed of one hollow fiber membrane cartridge. In the following description, an example in which the hollow fiber membrane module F is formed of a plurality of cartridges C illustrated in FIG. 6, and a membrane humidifier has a polygonal cross-sectional shape in a width direction will be described, but substantially the same can apply to a membrane humidifier in FIGS. 7 to 9. Further, a case in which a shape of the cartridge C also has a circular or rectangular cross section is illustrated, but the shape of the cartridge C is not limited thereto.

The cap case 120 is coupled to both ends of the middle case 110. Fluid passages 121 are formed in the respective cap cases 120, one of which becomes a first fluid inlet and the other one becomes a first fluid outlet. The first fluid flowing into the fluid passage 121 of the cap case 120 on one side passes through an inner duct of the hollow fiber membranes accommodated in the hollow fiber membrane cartridge (C, see FIG. 1), and then, exits through the fluid passage 121 of the cap case 120 on the other side. The hollow fiber membrane is, for example, a hollow fiber membrane of a Nafion, polyetherimide, polyphenylsulfone, polyimide (PI), polysulfone (PS), or polyethersulfone (PES) material.

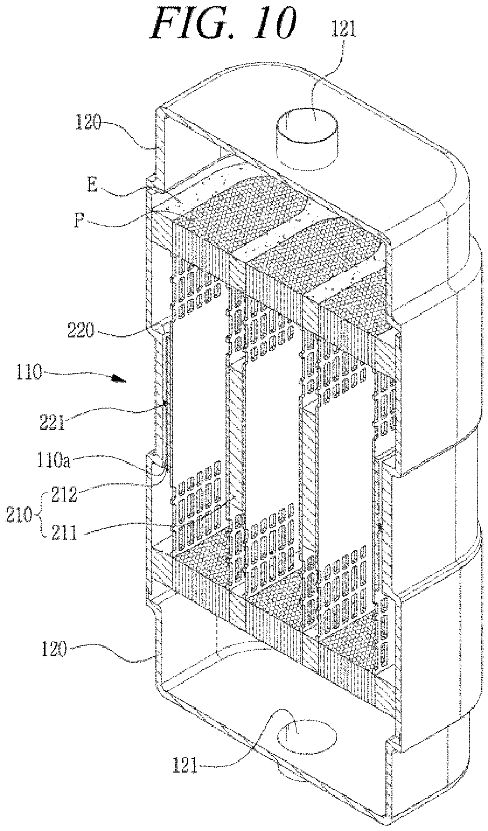

A first mesh portion (M1, see FIG. 1) causing the second fluid flowing into the membrane humidifier through the second fluid inlet 111 to flow into the hollow fiber membrane cartridge is formed at one end of the hollow fiber membrane cartridge C, and a second mesh unit (M2, see FIG. 1) causing the second fluid that has performed moisture exchange inside the hollow fiber membrane cartridge to flow to the outside of the hollow fiber membrane cartridge may be formed at the other end. Both sides of the hollow fiber membrane cartridge C are inserted into a module insertion portion 210 by being put into partition walls 211 and 212 (see FIG. 10). Further, locking jaws (not illustrated) may be selectively formed on both the sides of the hollow fiber membrane cartridge, and when the hollow fiber membrane cartridge is inserted into the module insertion portion 210, the locking jaws may be put into the partitions walls 211 and 212 forming the module insertion portion 210.

Potting portions P that fill gaps between the hollow fiber membranes while binding the hollow fiber membranes are formed at both ends of the hollow fiber membrane cartridge or the hollow fiber membrane bundle. Thus, both ends of the hollow fiber membrane module are closed by the potting portions P, and a flow path through which the second fluid passes is formed therein. A material of the potting portion is well known, and detailed description thereof is omitted herein. A resin layer E with which a gap between the potting portion P and the middle case 110 is filled may be formed around the potting portion P, or a gasket assembly (not illustrated) that airtightly couples the potting portion P to the middle case 110 through mechanical assembly may be formed around the potting portion P.

FIG. 10 is a cross-sectional view illustrating a portion of a middle case of the membrane humidifier for a fuel cell according to the embodiment of the present invention. As illustrated in FIG. 10, the module insertion portion 210 and an active pressure buffer portion 220 are formed inside the middle case 110.

The hollow fiber membrane cartridge C in which the plurality of hollow fiber membranes are accommodated is inserted into the module insertion portion 210. The module insertion portion 210 is made of a plurality of partition walls 211 and 212 so that the plurality of hollow fiber membrane cartridges C can be inserted. Meanwhile, when the hollow fiber membrane module F includes a single hollow fiber membrane cartridge, the inner partition wall 211 may be omitted. In this case, the module insertion portion 210 may be formed of only an outer partition wall 212.

An inner wall 110a of the middle case is formed to be spaced apart from the outer partition wall 212 of the module insertion portion 210. A space S created by the outer partition wall 212 and the inner wall 110a of the middle case being formed to be spaced apart from each other forms the active pressure buffer portion 220. The active pressure buffer portion 220 may further include a bypass structure 221 formed between the outer partition wall 212 and the inner wall 110a of the middle case.

The active pressure buffer portion 220 is formed over a circumference of the outer partition wall 212. The active pressure buffer portion 220 isolates the fluid flow space A from the fluid flow space B so that the fluid flows only through the hollow fiber membrane cartridge C.

Further, the bypass structure 221, which is one component of the active pressure buffer portion 220, can prevent the outer partition wall 212 from expanding outward due to a pressure difference or eliminate the pressure difference to prevent the humidification efficiency from being degraded even when pressure (internal pressure P1) of the second fluid flowing into the inside through the fluid inlet 111 formed in the middle case 110 is much higher than atmospheric pressure (external pressure P2) outside the membrane humidifier due to a high output situation or an abnormal output situation of the fuel cell.

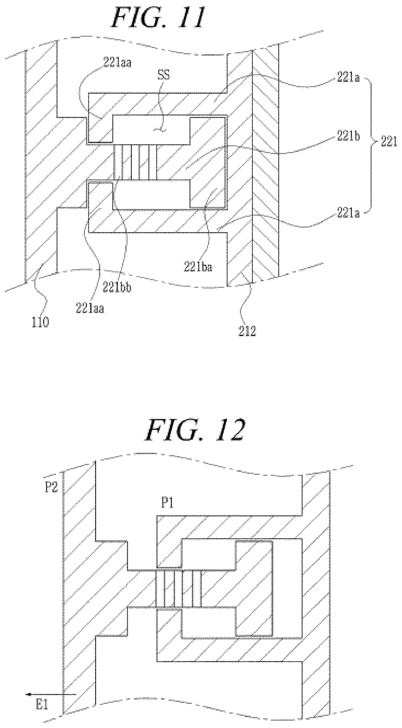

Hereinafter, the bypass structure 221 will be described with reference to FIG. 11, FIG. 12, and FIG. 13. FIG. 11, FIG. 12, and FIG. 13 are enlarged cross-sectional views of change in state depending on expansion pressure of the bypass structure 221, which is one component of the active pressure buffer portion 220.

As illustrated in FIG. 11, the bypass structure 221 includes a pair of protrusion members 221a, and an insertion member 221b. The pair of protrusion members 221a are formed to be fixed to the outer partition wall 212, protrude in a direction of the middle case 110, and be spaced apart from the inner wall 110a of the middle case 110. A sliding space SS is formed between the pair of protrusion members 221a. The insertion member 221b is formed on the inner wall 110a of the middle case 110 and is formed to protrude in a direction of the outer partition wall 212 and be inserted into the sliding space SS between the pair of protrusion members 221a.

First sliding protrusions 221aa protruding in opposite directions are formed at ends of the pair of protrusion members 221a on the middle case 110 side, and the insertion member 221b is inserted between the pair of first sliding protrusions 221aa.

A second sliding protrusion 221ba protruding in directions of the protrusion members 221a is formed at an end of the insertion member 221b on the outer partition wall 212 side. An outward movement of the second sliding protrusion 221ba is limited by the first sliding protrusion 221aa.

The insertion member 221b includes at least one bypass hole 221bb. When the insertion member 221b moves in the sliding space SS due to expansion pressure between the outer partition wall 212 and the middle case 110, the bypass holes 221bb may be opened or closed.

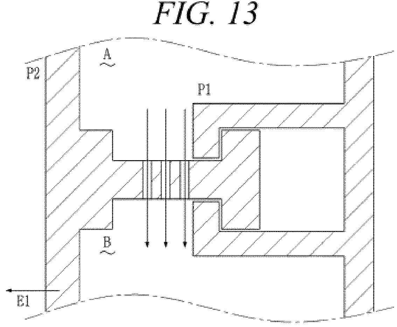

For example, when the sliding space SS is relatively large because the expansion pressure between the outer partition wall 212 and the middle case 110 is not high, the bypass holes 221bb are closed by the pair of protrusion members 221a (see FIG. 11). When the expansion pressure between the outer partition wall 212 and the middle case 110 gradually increases according to an output situation of the fuel cell, the insertion member 221b expands outward along with the middle case 110, and the bypass holes 221bb are opened (See FIGS. 12 and 13).

The pressure of the second fluid in the high output situation is relatively higher than that in the low output situation of the fuel cell. Further, the pressure of the second fluid in the abnormal output situation is relatively higher than that in the normal output situation of the fuel cell.

When the pressure of the second fluid is relatively higher in the high output situation or the abnormal output situation of the fuel cell, the middle case 110 receives the expansion pressure due to a large pressure difference and expands outward (indicated by E1). In this case, the insertion member 221b formed in the middle case 110 expands outward along with the middle case 110 (see FIG. 12)

When the high output situation or the abnormal output situation continues or further worsens, the pressure of the second fluid further increases, the insertion member 221b continues to expand outward, and the plurality of bypass holes 221bb closed by the pair of protrusion members 221a are gradually opened one by one (see FIG. 13).

When the bypass hole 221bb is open as in FIG. 13, the fluid in the fluid flow space A flows into the fluid flow space B through the bypass hole 221bb, and then, is discharged through the second mesh portion M2 and the second fluid outlet 112, thereby eliminating the pressure of the fluid flowing in the fluid flow space A.

Thereafter, when the high output situation or the abnormal output situation is eliminated, that is, when the fuel cell returns to the low output situation or the normal output situation, the pressure of the second fluid becomes relatively lower, and thus, the expansion pressure gradually decreases and the insertion member 221b returns to the direction of the outer partition wall 212. Accordingly, the bypass hole 221bb is closed again, making it possible to prevent the fluid in the fluid flow space A from flowing through the fluid flow space B instead of flowing through the hollow fiber membrane module F. (see FIG. 11).

The active pressure buffer portion 220 configured as described above allows the pressure on both sides of the outer partition wall 212 to be maintained substantially the same even when the output situation of the fuel cell is an abnormal output situation in which abnormal pressure is generated. Since a pressure gradient is not formed on both the sides of the outer partition wall 212 due to the active pressure buffer portion 220, the outer partition wall 212 is not deformed.

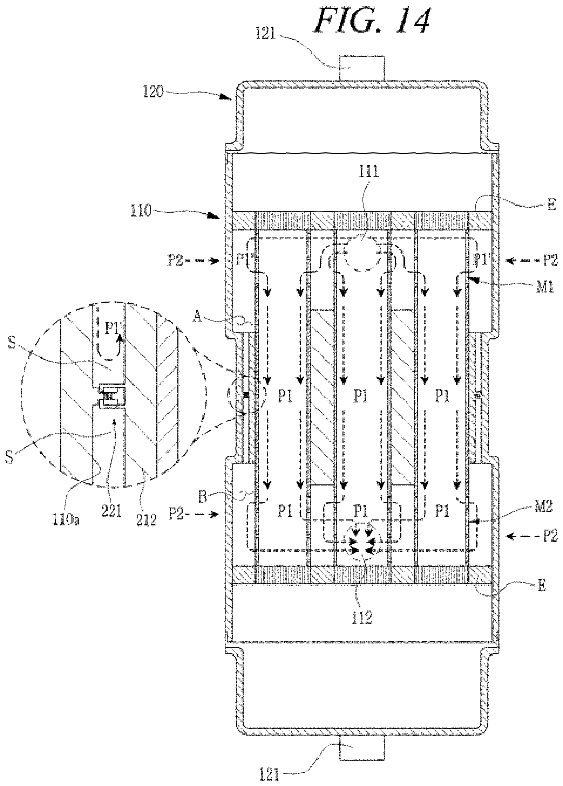

In connection thereto, referring to FIG. 14, the hollow fiber membrane cartridge C is disposed between the inner partition walls 211 and 212, and the second fluid discharged from the fuel cell stack (not illustrated) and flowing into the second fluid inlet 111 flows into the cartridge C through the first mesh portion M1, performs moisture exchange while flowing outside the hollow fiber membranes, and then, flows to the outside of the cartridge through the second mesh portion M2. In this case, since the pressure P1 of the fluid flowing through the hollow fiber membrane cartridge C is the same, the pressures on both the sides of the inner partition wall 211 are balanced so that no deformation occurs.

Meanwhile, in the outer partition wall 212, the second fluid at high pressure P1 flows through the hollow fiber membrane cartridge C on one side, and the second fluid at high pressure P1' that does not flow through the hollow fiber membrane cartridge C flows on the other side. Since the second fluids flowing through both the sides of the outer partition wall 212 have substantially the same pressure (P1 = P1'), the pressures on both the sides of the outer partition wall 212 are balanced so that no deformation occurs.

Meanwhile, when a pressure difference between the pressure P1 of the second fluid flowing through the active pressure buffer portion 220 and the atmospheric pressure P2 outside the middle case 110 is large in the high output situation or the abnormal output situation of the fuel cell, the insertion member 221b of the bypass structure 221 only expands outward together with the middle case 110, and the protrusion member 221a remains fixed to the outer partition wall 212. Thus, airtightness between the outer partition wall 212 and the hollow fiber membrane cartridge C is maintained, and the second fluid does not leak between the outer partition wall 212 and the hollow fiber membrane cartridge C.

Meanwhile, the second fluid flowing into the active pressure buffer portion 220 is turned in the bypass structure 221 and then, flows into the hollow fiber membrane cartridge C. Therefore, no gap is created between the hollow fiber membrane cartridge C and the outer partition wall 212 even in the high output situation or the abnormal output situation of the fuel cell unlike the related art, making it possible to prevent the fluid in the fluid flow space A from flowing through the fluid flow space B instead of flowing through the hollow fiber membrane module F, and as a result, to prevent the humidification efficiency from being degraded.

Further, when the high output situation or the abnormal output situation continues or further worsens, the pressure of the second fluid further increases so that the bypass holes 221bb formed in the insertion member 221b are open as openings thereof gradually increases (see FIG. 14). When the bypass hole 221bb are open, the fluid in the fluid flow space A flows into the fluid flow space B through the bypass hole 221bb, and then, is discharged through the second mesh portion M2 and the second fluid outlet 112, thereby eliminating the pressure of the fluid flowing in the fluid flow space A.

### [Description of code]

110: middle case 120: cap case
210: module insertion portion 211: inner partition wall
212: outer partition wall 220: active pressure buffer portion
221: bypass structure 221a: protrusion member
221b: insertion member 221aa, 221ba: sliding protrusion
221bb: bypass hole SS: sliding space A, B: fluid flow space
C: hollow fiber membrane cartridge
F: hollow fiber membrane module

## Claims

1. A membrane humidifier for a fuel cell comprising:
a middle case (110) having a module insertion portion (210) formed therein, the module insertion portion (210) including an outer partition wall (212) formed to be spaced apart from an inner wall (211) of a middle case (110);
a cap case (120) coupled to the middle case (110);
a hollow fiber membrane module inserted into the module insertion portion (210) and including at least one hollow fiber membrane bundle having a plurality of hollow fiber membranes integrated therein or at least one hollow fiber membrane cartridge having a plurality of hollow fiber membranes accommodated therein; and
an active pressure buffer portion (220) formed between the middle case (110) and the module insertion portion (210) to prevent the module insertion portion (210) from expanding due to a pressure difference between the inside and the outside of the middle case (110) or eliminate a pressure difference, depending on an output situation of a fuel cell,
wherein the active pressure buffer portion (220) is formed over a circumference of the outer partition wall (212),
wherein the active pressure buffer portion (220) includes a bypass structure (221) formed between the outer partition wall (212) and the inner wall (211) of the middle case (110)
wherein the bypass structure (221) includes
a pair of protrusion members (221a) formed to be fixed to the outer partition wall (212), protrude in a direction of the middle case (110), and be spaced apart from the inner wall (211) of the middle case (110);
a sliding space (SS) formed between the pair of protruding members; and
an insertion member (221b) formed on the inner wall (211) of the middle case (110), protruding in a direction of the outer partition wall (212), and inserted into the sliding space (SS),
wherein the insertion member (221b) includes bypass holes (221bb), the bypass holes (221bb) being able to be opened or closed depending on a magnitude of expansion pressure between the outer partition wall (212) and the middle case (110).

2. The membrane humidifier for a fuel cell of claim 1, wherein first sliding protrusions (221aa) protruding in opposite directions are formed at ends of the pair of protrusion members (221a) on the middle case (110) side.

3. The membrane humidifier for a fuel cell of claim 2, wherein a second sliding protrusion (221ba) protruding in directions of the protrusion members (221a) is formed at an end of the insertion member (221b) on the outer partition wall (212) side.

## Patentansprüche

1. Brennstoffzellenmembran-Befeuchter, aufweisend:
ein Mittelgehäuse (110) mit einem darin ausgebildeten Moduleinsetzabschnitt (210), wobei der Moduleinsetzabschnitt (210) eine äußere Trennwand (212) aufweist, die in einem Abstand zu einer Innenwand (211) des Mittelgehäuses (110) ausgebildet ist;
ein Kappengehäuse (120), das mit dem Mittelgehäuse (110) gekoppelt ist;
ein Hohlfasermembranmodul, das in den Moduleinsetzabschnitt (210) eingesetzt ist und mindestens ein Hohlfasermembranbündel mit mehreren darin integrierten Hohlfasermembranen oder mindestens eine Hohlfasermembrankartusche mit mehreren darin untergebrachten Hohlfasermembranen aufweist; und
einen aktiven Druckpufferabschnitt (220), der zwischen dem Mittelgehäuse (110) und dem Moduleinsetzabschnitt (210) ausgebildet ist, um je nach einem Leistungszustand einer Brennstoffzelle zu verhindern, dass sich der Moduleinsetzabschnitt (210) aufgrund eines Druckunterschieds zwischen dem Inneren und dem Äußeren des Mittelgehäuses (110) ausdehnt oder um einen Druckunterschied zu beseitigen,
wobei der aktive Druckpufferabschnitt (220) über einen Umfang der äußeren Trennwand (212) ausgebildet ist,
wobei der aktive Druckpufferabschnitt (220) eine Bypass-Struktur (221) aufweist, die zwischen der äußeren Trennwand (212) und der Innenwand (211) des Mittelgehäuses (110) ausgebildet ist, wobei die Bypass-Struktur (221) aufweist:
ein Paar von Vorsprungselementen (221a), die ausgebildet sind, an der äußeren Trennwand (212) befestigt zu sein, in Richtung des Mittelgehäuses (110) vorzustehen und von der Innenwand (211) des Mittelgehäuses (110) beabstandet zu sein;
einen Gleitraum (SS), der zwischen dem Paar von Vorsprungselementen ausgebildet ist; und
ein an der Innenwand (211) des Mittelgehäuses (110) ausgebildetes Einsetzelement (221b), das in Richtung der äußeren Trennwand (212) vorsteht und in den Gleitraum (SS) eingesetzt ist,
wobei das Einsetzelement (221b) Bypass-Öffnungen (221bb) aufweist, wobei die Bypass-Öffnungen (221bb) je nach Größe des Expansionsdrucks zwischen der äußeren Trennwand (212) und dem Mittelgehäuse (110) geöffnet oder geschlossen werden können.

2. Brennstoffzellenmembran-Befeuchter nach Anspruch 1, wobei an den Enden des Paares von Vorsprungselementen (221a) auf der Seite des Mittelgehäuses (110) erste, in entgegengesetzte Richtungen vorstehende Gleitvorsprünge (221aa) ausgebildet sind.

3. Brennstoffzellenmembran-Befeuchter nach Anspruch 2, wobei an einem Ende des Einsetzelements (221b) auf der Seite der äußeren Trennwand (212) ein zweiter Gleitvorsprung (221ba) ausgebildet ist, der in Richtungen der Vorsprungselemente (221a) vorsteht.

## Revendications

1. Humidificateur à membranes pour pile à combustible, comprenant:
un boîtier intermédiaire (110) ayant une partie d'insertion de module (210) formée à l'intérieur, la partie d'insertion de module (210) incluant une paroi de séparation extérieure (212) formée pour être espacée d'une paroi intérieure (211) du boîtier intermédiaire (110);
un boîtier d'extrémité (120) couplé au boîtier intermédiaire (110);
un module à membranes en fibres creuses inséré dans la partie d'insertion de module (210) et incluant au moins un faisceau de membranes en fibres creuses ayant une pluralité de membranes en fibres creuses intégrées à l'intérieur ou au moins une cartouche de membranes en fibres creuses ayant une pluralité de membranes en fibres creuses reçues à l'intérieur; et
une partie tampon de pression active (220) formée entre le boîtier intermédiaire (110) et la partie d'insertion de module (210) pour empêcher la partie d'insertion de module (210) de se dilater en raison d'une différence de pression entre l'intérieur et l'extérieur du boîtier intermédiaire (110) ou pour éliminer une différence de pression, en fonction d'une situation de sortie d'une pile à combustible,
dans lequel la partie tampon de pression active (220) est formée sur une circonférence de la paroi de séparation extérieure (212),
dans lequel la partie tampon de pression active (220) inclut une structure de dérivation (221) formée entre la paroi de séparation extérieure (212) et la paroi intérieure (211) du boîtier intermédiaire (110),
dans lequel la structure de dérivation (221) inclut
une paire d'éléments en saillie (221a) formés pour être fixés à la paroi de séparation extérieure (212), faire saillie dans une direction du boîtier intermédiaire (110) et être espacés de la paroi intérieure (211) du boîtier intermédiaire (110);
un espace de coulissement (SS) formé entre la paire d'éléments en saillie; et
un élément d'insertion (221b) formé sur la paroi intérieure (211) du boîtier intermédiaire (110), faisant saillie dans une direction de la paroi de séparation extérieure (212) et inséré dans l'espace de coulissement (SS),
dans lequel l'élément d'insertion (221b) inclut des orifices de dérivation (221bb), les orifices de dérivation (221bb) étant capables d'être ouverts ou fermés en fonction d'une ampleur de la pression de dilatation entre la paroi de séparation extérieure (212) et le boîtier intermédiaire (110).

2. Humidificateur à membranes pour pile à combustible selon la revendication 1, dans lequel des premières saillies de coulissement (221aa) faisant saillie dans des directions opposées sont formées aux extrémités de la paire d'éléments en saillie (221a) du côté du boîtier intermédiaire (110).

3. Humidificateur à membranes pour pile à combustible selon la revendication 2, dans lequel une seconde saillie de coulissement (221ba) faisant saillie en direction des éléments en saillie (221a) est formée à une extrémité de l'élément d'insertion (221b) du côté de la paroi de séparation extérieure (212).
